# EUROPEAN PATENT APPLICATION

(11) **EP 4 748 665 A1**
(43) Date of publication of application: **27.05.2026**
(21) Application number: 25216292.0
(22) Date of filing: 17.11.2025
(51) Int. Cl.: B60T 8/17

(54) **DUAL CONTROL ARCHITECTURE FOR HYDRAULIC AND ELECTRIC BRAKE SYSTEMS**

(30) Priority: 21.11.2024 US 202418955288
(71) Applicant: Goodrich Corporation, Charlotte, NC 28217-4578 (US)
(72) Inventor: GEORGIN, Marc J, Oakwood, 45419 (US); THAPA MAGAR, Kaman, Beavercreek, 45431 (US); BAINS, Resham, Tipp City, 45371 (US)
(74) Representative: Dehns

(57) **Abstract**

A brake system is disclosed herein and includes a brake mode selection mechanism (204) configured to provide a desired braking command, an antiskid control mechanism (206) configured to provide an antiskid control braking command, and a brake executive mechanism (202). The brake executive mechanism (202) is configured to determine whether the antiskid control braking command is less than the desired braking command; responsive to the antiskid control braking command being less than the desired braking command, send a first command to implement the antiskid control braking command via an antiskid controller (208) configured to control a pressure or a force applied to a brake assembly; and, responsive to the desired braking command being less than the antiskid control braking command, send a second command to implement the desired braking command via a desired braking controller (210) configured to control the pressure or the force applied to the brake assembly.

## Description

### FIELD

The present disclosure generally relates to aircraft brake systems, and more specifically, to a dual control architecture for hydraulic and electric brake systems.

### BACKGROUND

Aircraft typically utilize brake systems on wheels to slow or stop the aircraft during landings, taxiing, and rejected takeoffs. The brake systems generally employ a brake stack including a series of friction disks that may be forced into sliding contact with one another during brake actuation to slow or stop the aircraft. Brake systems are typically either hydraulic or electric. Typical antiskid architectures for aircraft brake system are such that the antiskid function direct controls a servo valve current in competition with a pressure controller responding to a current command form a pilot or co-pilot. Furthermore, current hydraulic aircraft brake architectures are not portable to an electric brake system because antiskid functionality is not advisable to directly control the electric brake actuators (EBA) motor currents. That is, in a hydraulic brake system, the servo current is proportional to the pressure (and therefore clamping force). However, in an electric brake system, the motor current is not directly proportional to the clamping force.

### SUMMARY

Disclosed herein is a brake system. The brake system includes a brake mode selection mechanism, an antiskid control mechanism, a desired braking controller, an antiskid controller, and a brake executive mechanism. The brake mode selection mechanism is configured to provide a desired braking command. The antiskid control mechanism is configured to provide an antiskid control braking command. The brake executive mechanism is configured to determine whether the antiskid control braking command is less than the desired braking command, responsive to the antiskid control braking command being less than the desired braking command, send a first command to implement the antiskid control braking command, where responsive to receiving the first command, the antiskid controller is configured to control at least one of a pressure or a force applied to a brake assembly, and, responsive to the desired braking command being less than the antiskid control braking command, send a second command to implement the desired braking command, where responsive to receiving the second command, the desired braking controller is configured to control at least one of the pressure or the force applied to the brake assembly.

In various embodiments, the desired braking command originates from at least one of a brake pedal, an autobrake, or a deceleration control mechanism.

In various embodiments, the antiskid controller is configured to provide first frequency responses of between 10 Hertz and 16 Hertz.

In various embodiments, the desired braking controller is configured to provide second frequency responses of between 2 Hertz and 6 Hertz.

In various embodiments, responsive to the antiskid controller controlling the pressure applied to the brake assembly, the antiskid controller is configured to control a servo valve to apply the pressure to the brake assembly. In various embodiments, responsive to the antiskid controller controlling the force applied to the brake assembly, the antiskid controller is configured to control at least one electric brake actuator to apply the force to the brake assembly.

In various embodiments, responsive to the desired braking controller controlling the pressure applied to the brake assembly, the desired braking controller is configured to control a servo valve to apply the pressure to the brake assembly. In various embodiments, responsive to the desired braking controller controlling the force applied to the brake assembly, the desired braking controller is configured to control at least one electric brake actuator to apply the force to the brake assembly.

In various embodiments, responsive to the brake system being an electric brake system, the brake executive mechanism is configured to send at least one of the first command or the second command to an electric brake actuator controller that includes an origin of the first command or the second command. In various embodiments, the electric brake actuator controller identifies the origin of the first command or the second command. In various embodiments, responsive to the origin being from the antiskid control mechanism, the electric brake actuator controller is configured to send the first command to the antiskid controller. In various embodiments, responsive to the origin being from the brake mode selection mechanism, the electric brake actuator controller is configured to send the second command to the desired braking controller.

Also disclosed herein is an aircraft. The aircraft includes a wheel and a brake system coupled to the wheel. The brake system includes a brake mode selection mechanism, an antiskid control mechanism, a desired braking controller, an antiskid controller, and a brake executive mechanism. The brake mode selection mechanism is configured to provide a desired braking command. The antiskid control mechanism is configured to provide an antiskid control braking command. The brake executive mechanism is configured to determine whether the antiskid control braking command is less than the desired braking command, responsive to the antiskid control braking command being less than the desired braking command, send a first command to implement the antiskid control braking command, where responsive to receiving the first command, the antiskid controller is configured to control at least one of a pressure or a force applied to a brake assembly, and, responsive to the desired braking command being less than the antiskid control braking command, send a second command to implement the desired braking command, where responsive to receiving the second command, the desired braking controller is configured to control at least one of the pressure or the force applied to the brake assembly.

In various embodiments, the desired braking command originates from at least one of a brake pedal, an autobrake, or a deceleration control mechanism.

In various embodiments, the antiskid controller is configured to provide first frequency responses of between 10 Hertz and 16 Hertz.

In various embodiments, the desired braking controller is configured to provide second frequency responses of between 2 Hertz and 6 Hertz.

In various embodiments, responsive to the antiskid controller controlling the pressure applied to the brake assembly, the antiskid controller is configured to control a servo valve to apply the pressure to the brake assembly. In various embodiments, responsive to the antiskid controller controlling the force applied to the brake assembly, the antiskid controller is configured to control at least one electric brake actuator to apply the force to the brake assembly.

In various embodiments, responsive to the desired braking controller controlling the pressure applied to the brake assembly, the desired braking controller is configured to control a servo valve to apply the pressure to the brake assembly. In various embodiments, responsive to the desired braking controller controlling the force applied to the brake assembly, the desired braking controller is configured to control at least one electric brake actuator to apply the force to the brake assembly.

In various embodiments, responsive to the brake system being an electric brake system, the brake executive mechanism is configured to send at least one of the first command or the second command to an electric brake actuator controller that includes an origin of the first command or the second command. In various embodiments, the electric brake actuator controller identifies the origin of the first command or the second command. In various embodiments, responsive to the origin being from the antiskid control mechanism, the electric brake actuator controller is configured to send the first command to the antiskid controller. In various embodiments, responsive to the origin being from the brake mode selection mechanism, the electric brake actuator controller is configured to send the second command to the desired braking controller.

Additionally disclosed herein is a method for dual control of a brake system. The method including receiving, by a brake executive mechanism via a brake mode selection mechanism, a desired braking command; receiving, by the brake executive mechanism via an antiskid control mechanism, an antiskid control braking command; determining, by the brake executive mechanism, whether the antiskid control braking command is less than the desired braking command; responsive to the antiskid control braking command being less than the desired braking command, sending, by the brake executive mechanism, a first command to implement the antiskid control braking command, where the first command causes an antiskid controller to control at least one of a pressure or a force applied to a brake assembly; and, responsive to the desired braking command being less than the antiskid control braking command, sending, by the brake executive mechanism, a second command to implement the desired braking command, where the second command causes a desired braking controller to control at least one of the pressure or the force applied to the brake assembly.

In various embodiments, the desired braking command originates from at least one of a brake pedal, an autobrake, or a deceleration control mechanism.

In various embodiments, the antiskid controller is configured to provide first frequency responses of between 10 Hertz and 16 Hertz.

In various embodiments, the desired braking controller is configured to provide second frequency responses of between 2 Hertz and 6 Hertz.

In various embodiments, responsive to the antiskid controller controlling the pressure applied to the brake assembly, the antiskid controller is configured to control a servo valve to apply the pressure to the brake assembly. In various embodiments, responsive to the antiskid controller controlling the force applied to the brake assembly, the antiskid controller is configured to control at least one electric brake actuator to apply the force to the brake assembly.

In various embodiments, responsive to the desired braking controller controlling the pressure applied to the brake assembly, the desired braking controller is configured to control a servo valve to apply the pressure to the brake assembly. In various embodiments, responsive to the desired braking controller controlling the force applied to the brake assembly, the desired braking controller is configured to control at least one electric brake actuator to apply the force to the brake assembly.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A illustrates an aircraft having a brake system, in accordance with various embodiments.
FIG. 1B illustrates a cross-sectional view of a brake assembly, in accordance with various embodiments.
FIG. 2 illustrates a hydraulic braking system, in accordance with various embodiments.
FIG. 3 illustrates an electric braking system, in accordance with various embodiments.
FIG. 4 illustrates a flow diagram of dual control of a brake system, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein, in accordance with various embodiments, is a dual control architecture for hydraulic and electric brake systems. In various embodiments, a brake executive mechanism of a brake control unit (BCU) may receive various desired braking commands, such as a pedal braking command via brake pedals controlled by a pilot or co-pilot that may be particular to a specific brake, i.e. right outside brake, right inside brake, left inside brake, or left outside brake; common braking commands received from deceleration control mechanism that are common to the right outside brake, the right inside brake, the left inside brake, and the left outside brake; and/or autobraking commands from an autobraking mechanism that utilizes various sensors of the aircraft to command braking when required. In various embodiments, the desired braking commands may be either pressure commands for hydraulic brake systems or force commands for electrical brake systems. In various embodiments, regardless of the source of the braking command, the requested braking command is supplied to the brake executive as the desired braking command. Additionally, in various embodiments, the brake executive may also receive an antiskid control braking command from an antiskid control mechanism. In various embodiments, the braking commands may be either pressure commands for hydraulic brake systems or force commands for electrical brake systems. In various embodiments, responsive to receiving the desired braking command and the antiskid control braking command, the braking executive determines which of the braking commands is for the least amount of braking. For example, if the desired braking command is for 40 percent of brakes and the antiskid control braking command is for 20 percent of the brakes, due to, for example, a wet runway, then the brake executive only allows for application of 20 percent of brakes. In various embodiments, the brake executive may control the applied percentage of braking individually for each brake on the aircraft, i.e., on a four-wheel aircraft, for each of the right outside brake, right inside brake, left inside brake, and left outside brake.

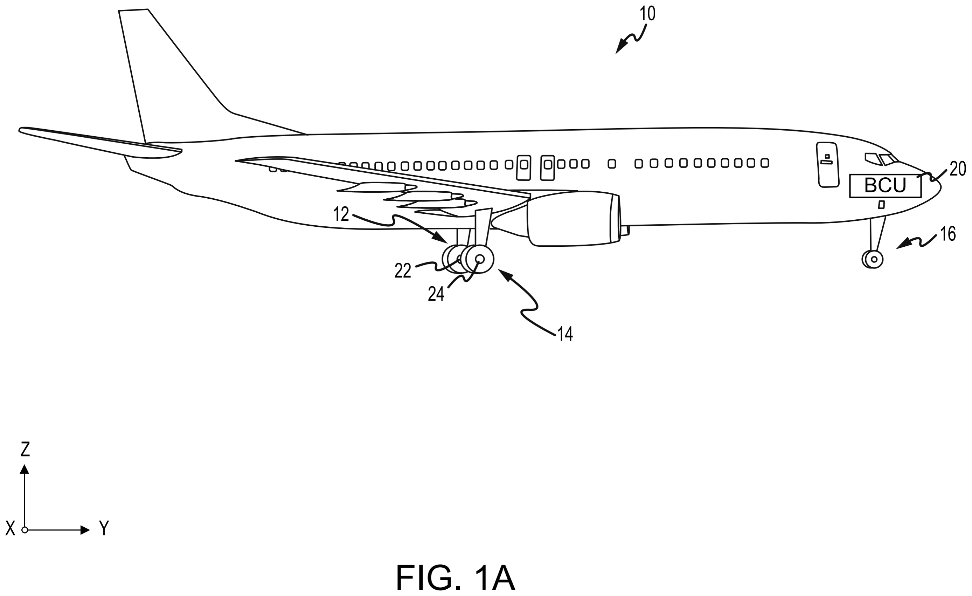

Referring to Figure 1A, in accordance with various embodiments, an aircraft 10 is illustrated. The aircraft 10 includes landing gear, which may include a left main landing gear 12, a right main landing gear 14 and a nose landing gear 16. The landing gear support the aircraft 10 when it is not flying, allowing the aircraft 10 to taxi, take off, and land without damage. While the disclosure refers to the three landing gear configurations just referred, the disclosure nevertheless contemplates any number of landing gear configurations.

Aircraft 10 may further include a brake control unit (BCU) 20 for controlling a left main brake mechanism 22 of left main landing gear 12 and a right main brake mechanism 24 of right main landing gear 14. BCU 20 controls the application of brake mechanisms 22, 24 in response to input from aircraft 10 or an authorized user. BCU 20 further controls a parking brake functionality of brake mechanisms 22, 24 to secure aircraft 10 in place. A plurality of wires that independently control the braking and parking brake functionalities run through aircraft 10 from BCU 20 to left main brake mechanism 22 and right main brake mechanism 24.

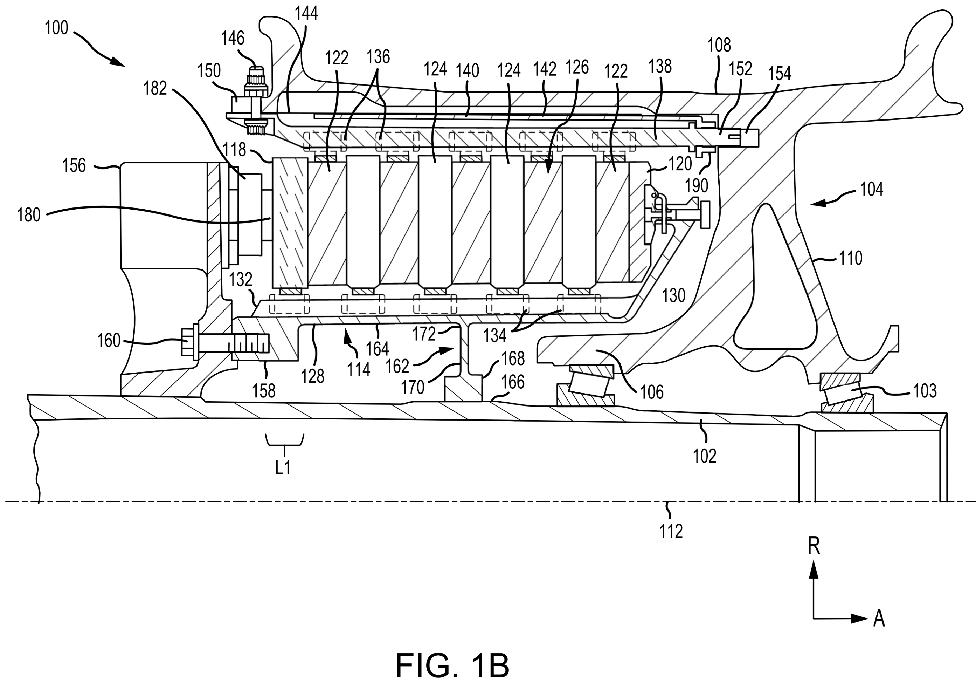

Referring now to Figure 1B, there is schematically depicted a brake mechanism 100 that may be used by the aircraft 10 of Figure 1A or any other appropriate aircraft. Brake mechanism 100 may be an example of left main brake mechanism 22 and/or right main brake mechanism 24 described above with respect to FIG. 1A. Brake mechanism 100 is mounted on an axle 102 for use with a wheel 104 disposed on and configured to rotate about axle 102 via one or more bearing assemblies 103. Wheel 104 includes a hub 106, a wheel well 108 concentric about hub 106 and a web portion 110 interconnecting the hub 106 and the wheel well 108. A central axis 112 extends through axle 102 and defines a center of rotation of wheel 104. A torque plate barrel 114 (sometimes referred to as a torque tube or barrel or a torque plate or back leg) is aligned concentrically with hub 106, and wheel 104 is rotatable relative to torque plate barrel 114.

Brake mechanism 100 includes a set of hydraulic or electric actuators, typically between 4 and 16, one of which is illustrated as actuator 182, a pressure plate 118 disposed adjacent the actuator 182, an end plate 120 positioned a distal location from the actuator 182, and a plurality of rotor disks 122 interleaved with a plurality of stator disks 124 positioned intermediate to the pressure plate 118 and the end plate 120. Pressure plate 118, the plurality of rotor disks 122, the plurality of stator disks 124, and end plate 120 together form a brake heat sink or brake stack 126. Pressure plate 118, end plate 120, and the plurality of stator disks 124 are mounted to torque plate barrel 114 and remain rotationally stationary relative to axle 102.

Torque plate barrel 114 may include an annular barrel or torque tube 128 and an annular plate or back leg 130. Back leg 130 is disposed at an end distal from actuator 182 and may be made monolithic with torque tube 128, as illustrated in Figure 1B, or may be made as a separate annular piece and suitably connected to torque tube 128. Torque tube 128 has a plurality of circumferentially spaced and axially extending splines 132 disposed on an outer surface of the torque tube 128. The plurality of stator disks 124 and pressure plate 118 include notches or stator slots 134 on an inner periphery of the disks and the plate for engagement with splines 132, such that each disk and the plate are axially slidable with respect to torque tube 128.

End plate 120 is suitably connected to back leg 130 of torque plate barrel 114 and is held non-rotatable, together with the plurality of stator disks 124 and pressure plate 118, during a braking action. The braking action may include actuator 182 applying an amount of pressure or force between 0% and 100% of available pressure or force to pressure plate 118. In that regard, the braking system provides a pressure or force that may vary from 0 to 100%. Actuator 182 is configured to apply pressure or force to the to pressure plate 118 in proportion to the braking command supplied by the braking executive of BCU. The plurality of rotor disks 122, interleaved between pressure plate 118, end plate 120, and the plurality of stator disks 124, each have a plurality of circumferentially spaced notches or rotor lugs 136 along an outer periphery of each disk for engagement with a plurality of torque bars 138 that are secured to or made monolithic with an inner periphery of wheel 104.

An actuating mechanism for the brake mechanism 100 includes a plurality of actuators circumferentially spaced around an annular brake housing 156 (only one actuator, actuator 182, is illustrated in Figure 1B). Upon actuation, the plurality of actuators affects a braking action by urging the pressure plate 118 and the plurality of stator disks 124 into frictional engagement with the plurality of rotor disks 122 and against end plate 120. Each of the plurality of actuators (e.g., actuator 182, etc.) includes a ram 180 configured to engage pressure plate 118 by extending a length, or distance, L1. An electric power is applied to actuate the plurality of actuators causing ram 180 to extend and engage pressure plate 118. In various embodiments, the ram extension length may be proportional to an amount of braking force applied by brake mechanism. Through compression of the plurality of rotor disks 122 and the plurality of stator disks 124 between pressure plate 118 and end plate 120, the resulting frictional contact slows or stops or otherwise prevents rotation of wheel 104. The plurality of rotor disks 122 and the plurality of stator disks 124 are fabricated from various materials, such as carbon matrix composites, which enable the brake disks to withstand and dissipate the heat generated during and following a braking action.

Torque plate barrel 114 is secured to a stationary portion of the landing gear such as axle 102, preventing the torque plate barrel 114 and the plurality of stator disks 124 from rotating during braking of the aircraft. Torque tube 128 portion of torque plate barrel 114 may be attached to annular brake housing 156 via an annular mounting surface 158, where bolt fasteners 160 secure torque plate barrel 114 to annular brake housing 156. A spacer member or pedestal 162 is positioned between an inner diameter surface 164 of torque tube 128 and an outer diameter surface 166 of axle 102. Pedestal 162 includes a radially inner surface or foot 168 for engaging the axle 102, a web portion 170 radially outward of foot 168, and a head portion 172 for engaging inner diameter surface 164 of torque tube 128. Pedestal 162 augments support of torque plate barrel 114 within brake mechanism 100 generally and, more particularly, against axle 102. Pedestal 162 may be made monolithic with torque tube 128 portion of torque plate barrel 114.

A heat shield 140 is secured directly or indirectly to wheel 104 between a radially inward surface of wheel well 108 and the plurality of torque bars 138. As illustrated in Figure 1B, heat shield 140 is concentric with wheel well 108 and may have a plurality of heat shield sections 142 disposed between respective, adjacent pairs of the plurality of torque bars 138. Heat shield 140, or heat shield sections 142, is spaced from the radially inward surface of wheel well 108 and secured in place by heat shield tabs 190, such that heat shield 140, or heat shield sections 142, is disposed generally parallel to the axis of rotation or central axis 112 of wheel 104 and intermediate the plurality of torque bars 138 and the radially inward surface of wheel well 108. In various embodiments, including for heavy-duty applications, heat shield 140, or heat shield sections 142, may be further secured in place by heat shield carriers 144.

The plurality of torque bars 138 is attached at axially inboard ends to the wheel 104 by torque bar bolts 146. Torque bar bolts 146 extend through respective holes in a flange 150 provided on wheel 104 as shown, which flange 150 for purposes of the present description is intended to be considered as part of wheel well 108. Each of the plurality of torque bars 138 may include a pin 152 or similar member at its axially outboard end (i.e., the end opposite the torque bar bolts 146) that is received within a hole 154 disposed proximate the web portion 110 of the wheel 104. Heat shield 140, or heat shield sections 142, is positioned adjacent a radially inward surface of wheel well 108 and secured in place by heat shield tabs 190.

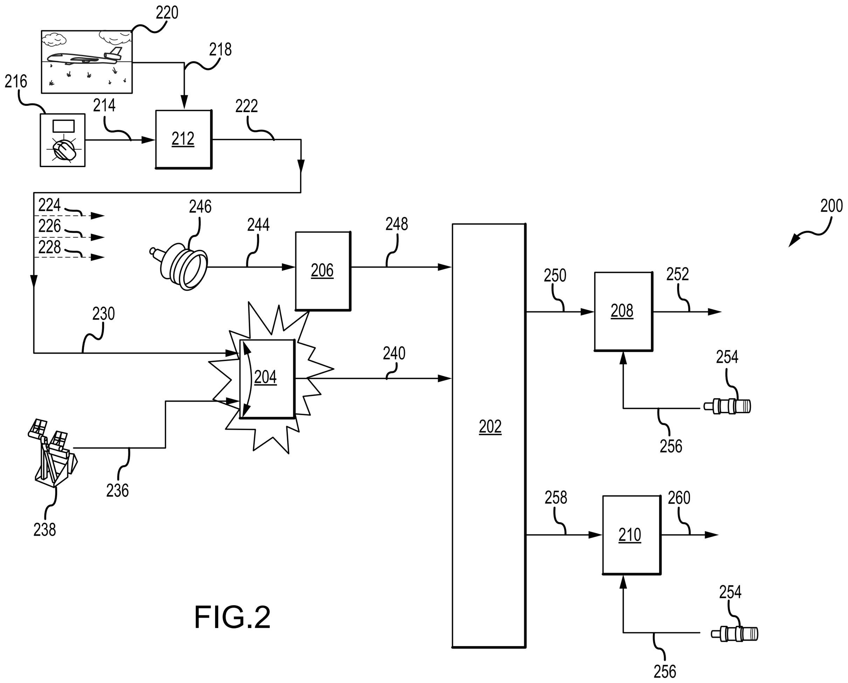

Referring now to FIG. 2, in accordance with various embodiments, a hydraulic braking system 200 is illustrated. In various embodiments, the hydraulic braking system 200 includes brake executive mechanism 202, which is electrically coupled to brake mode selection mechanism 204, antiskid control mechanism 206, antiskid pressure controller 208, and desired braking pressure controller 210. In various embodiments, the brake mode selection mechanism 204 is configured to receive various desired braking pressure commands. In various embodiments, one of the desired braking pressure commands may originate from an autobrake mechanism 212, which receives various signals, such as a pilot's/co-pilot's desired deceleration signal 214 from an autobrake engaged/disengaged switch 216 in the cockpit of the aircraft or an aircraft deceleration feedback signal 218 from one or more sensors on the aircraft, among others. In various embodiments, the autobrake mechanism 212 is configured to provide the common braking pressure command signal 222 to each brake mode selector for each of a right outside brake 224, the right inside brake 226, the left inside brake 228, and the brake mode selection mechanism 204 for the left outside brake 230. In various embodiments, one of the desired braking commands may be a pedal braking pressure command signal 236 that originates from brake pedals 238 controlled by a pilot or co-pilot that may be particular to a specific brake, such as left outside brake of the brake pedals 238. In that regard, in various embodiments, the brake pedals 238 provide the pedal braking pressure command signal 236 to the brake mode selection mechanism 204. In various embodiments, the brake mode selection mechanism 204 is configured to send the selected braking pressure command to the brake executive mechanism 202 as a desired braking pressure command 240. In that regard, responsive to the autobrake mechanism 212 being active and brake pedals 238 not being depressed, the brake mode selection mechanism 204 sends the braking pressure command signal 222 to the brake executive mechanism 202 as the desired braking pressure command 240. Alternatively, responsive to the brake mode selection mechanism 204 detecting any pedal braking pressure command signal 236 from the brake pedals 238, the brake mode selection mechanism 204 sends the pedal braking pressure command signal 236 to the brake executive mechanism 202 as the desired braking pressure command 240.

In various embodiments, the antiskid control mechanism 206 is specific to each wheel of the aircraft. In that regard, in various embodiments, the antiskid control mechanism 206 is configured to receive a wheel speed signal 244 from a wheel speed sensor 246, which, in the illustration, is from the left outside wheel. In various embodiments, the antiskid control mechanism 206 is configured to determine whether the wheel speed indicates a skid condition and, responsive to identifying a skid condition, is configured to provide an antiskid braking pressure command to the brake executive mechanism 202.

In various embodiments, responsive to receiving the desired braking pressure command 240 and the antiskid control braking pressure command 248, the brake executive mechanism 202 determines which of the desired braking pressure command 240 or the antiskid control braking pressure command 248 is for the least amount of braking. For example, if the desired braking pressure command 240 is for 40 percent of brakes and the antiskid control braking pressure command 248 is for 20 percent of the brakes, due to, for example, a wet runway, then the brake executive mechanism 202 only allows for application of 20 percent of brakes. In that regard, in various embodiments, responsive to the antiskid control braking pressure command 248 being less than the desired braking pressure command 240, the brake executive mechanism 202 is configured to send a first braking pressure command signal 250 to the antiskid pressure controller 208 and the antiskid pressure controller 208 is configured to apply a first current 252 via a servo valve to the left outside brake. In various embodiments, hydraulic pressure sensor 254 associated with the left outside brake is configured to detect an applied pressure to the left outside brake and is further configured to provide an applied pressure signal 256 to the antiskid pressure controller 208, which the antiskid pressure controller 208 utilizes to control the applied pressure to the left outside brake as per the first braking pressure command signal 250. In various embodiments, the antiskid pressure controller 208 is tuned for antiskid performance and thus, first frequency responses, i.e., between 10 Hertz and 16 Hertz.

In various embodiments, responsive to the desired braking pressure command 240 being less than the antiskid control braking pressure command 248, the brake executive mechanism 202 is configured to send a second braking pressure command signal 258 to the desired braking pressure controller 210 and the desired braking pressure controller 210 is configured to apply a second current 260 via a servo valve to the left outside brake. In various embodiments, hydraulic pressure sensor 254 associated with the left outside brake is configured to detect an applied pressure to the left outside brake and is further configured to provide an applied pressure signal 256 to the desired braking pressure controller 210, which the desired braking pressure controller 210 utilizes to control the applied pressure to the left outside brake as per the second braking pressure command signal 258. In various embodiments, the desired braking pressure controller 210 is tuned for pilot pedal braking response and thus, second frequency responses, i.e., between 2 Hertz and 6 Hertz.

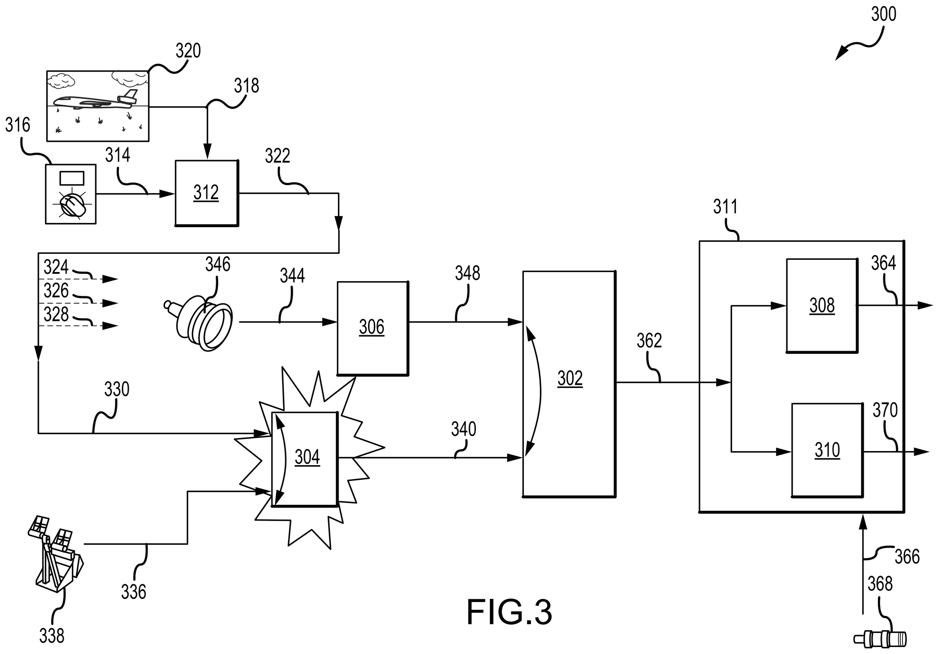

Referring now to FIG. 3, in accordance with various embodiments, an electric braking system 300 is illustrated. In various embodiments, the electric braking system 300 includes brake executive mechanism 302, which is electrically coupled to brake mode selection mechanism 304, antiskid control mechanism 306, antiskid force controller 308, and desired braking force controller 310. In various embodiments, the antiskid force controller 308 and the desired braking force controller 310 reside within an electric brake actuator controller (EBAC) 311. In various embodiments, the brake mode selection mechanism 304 is configured to receive various desired braking force commands. In various embodiments, one of the desired braking force commands may originate from an autobrake mechanism 312, which receives various signals, such as a pilot's/co-pilot's desired deceleration signal 314 from an autobrake engaged/disengaged switch 316 in the cockpit of the aircraft or an aircraft deceleration feedback signal 318 from one or more sensors on the aircraft, among others. In various embodiments, the autobrake mechanism 312 is configured to provide the common braking force command signal 322 to each brake mode selector for each of a right outside brake 324, the right inside brake 326, the left inside brake 328, and the brake mode selection mechanism 304 for the left outside brake 330. In various embodiments, one of the desired braking commands may be a pedal braking force command signal 336 that originates from brake pedals 338 controlled by a pilot or co-pilot that may be particular to a specific brake, such as left outside brake of pedal of the brake pedals 338. In that regard, in various embodiments, the brake pedals 338 provide the pedal braking force command signal 336 to the brake mode selection mechanism 304. In various embodiments, the brake mode selection mechanism 304 is configured to send the selected braking force command to the brake executive mechanism 302 as a desired braking force command 340. In that regard, responsive to the autobrake mechanism 312 being active and brake pedals 338 not being depressed, the brake mode selection mechanism 304 sends the braking force command signal 322 to the brake executive mechanism 302 as the desired braking force command 340. Alternatively, responsive to the brake mode selection mechanism 304 detecting any pedal braking force command signal 336 from the brake pedals 338, the brake mode selection mechanism 304 sends the pedal braking force command signal 336 to the brake executive mechanism 302 as the desired braking force command 340.

In various embodiments, the antiskid control mechanism 306 is specific to each wheel of the aircraft. In that regard, in various embodiments, the antiskid control mechanism 306 is configured to receive a wheel speed signal 344 from a wheel speed sensor 346, which, in the illustration, is from the left outside wheel. In various embodiments, the antiskid control mechanism 306 is configured to determine whether the wheel speed indicates a skid condition and, responsive to identifying a skid condition, is configured to provide an antiskid braking force command to the brake executive mechanism 302.

In various embodiments, responsive to receiving the desired braking force command 340 and the antiskid control braking force command 348, the brake executive mechanism 302 determines which of the desired braking force command 340 or the antiskid control braking force command 348 is for the least amount of braking. For example, if the desired braking force command 340 is for 40 percent of brakes and the antiskid control braking force command 348 is for 20 percent of the brakes, due to, for example, a wet runway, then the brake executive mechanism 302 only allows for application of 20 percent of brakes. In that regard, in various embodiments, responsive to the antiskid control braking force command 348 being less than the desired braking force command 340, the brake executive mechanism 302 is configured to send a braking force command and origin signal 362 to the EBAC 311. In various embodiments, responsive to receiving the braking force command and origin signal 362, the EBAC 311 determines the origin of the braking force command. In that regard, in various embodiments, if the braking force command and origin signal 362 indicates that the braking force command originated from the antiskid control mechanism 306, then the EBAC 311 is configured to utilize the antiskid force controller 308 to apply a first force 364 via at least one electric brake actuator to the left outside brake. In various embodiments, a load cell 368 associated to an electric brake actuator of the left outside brake is configured to detect an applied force to the left outside brake and is further configured to provide an applied force signal 366 to the antiskid force controller 308, which the antiskid force controller 308 utilizes to control the applied force to the left outside brake as per the braking force command and origin signal 362. In various embodiments, the antiskid force controller 308 is tuned for antiskid performance and thus, first frequency responses, i.e., between 10 Hertz and 16 Hertz.

In various embodiments, responsive to the desired braking force command 340 being less than the antiskid control braking force command 348, the brake executive mechanism 302 is configured to send a braking force command and origin signal 362 to the EBAC 311. In various embodiments, responsive to receiving the braking force command and origin signal 362, the EBAC 311 determines the origin of the braking force command. In that regard, in various embodiments, if the braking force command and origin signal 362 indicates that the braking force command originated from the brake mode selection mechanism 304, then the EBAC 311 is configured to utilize the desired braking force controller 310 to apply a second force 370 via at least one electric brake actuator to the left outside brake. In various embodiments, a load cell 368 associated to an electric brake actuator of the left outside brake is configured to detect an applied force to the left outside brake and is further configured to provide an applied force signal 366 to the desired braking force controller 310, which the desired braking force controller 310 utilizes to control the applied force to the left outside brake as per the braking force command and origin signal 362. In various embodiments, the desired braking force controller 310 is tuned for pilot pedal braking response and thus, second frequency responses, i.e., between 2 Hertz and 6 Hertz.

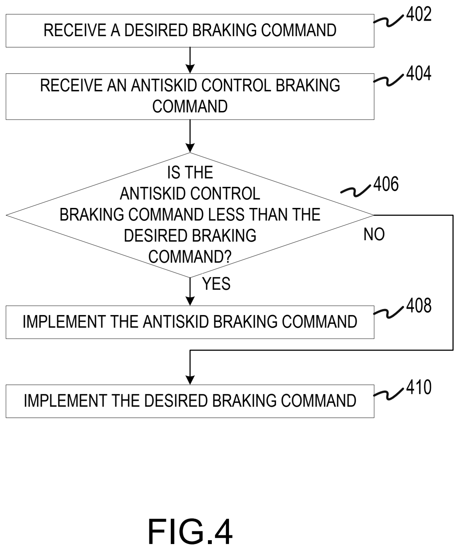

Referring now to FIG. 4, in accordance with various embodiments, a flow diagram of dual control of a brake system is illustrated. In various embodiments, at block 402, the brake executive mechanism is configured to receive a desired braking. In various embodiments, at block 404, the brake executive mechanism is configured to receive an antiskid control braking command. In various embodiments, at block 406, the brake executive mechanism determines whether the antiskid control braking command is less than the desired braking command. In various embodiments, responsive to the antiskid control braking command being less than the desired braking command, at block 408, the brake executive mechanism send a first command to implement the antiskid control braking command. In various embodiments, responsive to the desired braking command being less than the antiskid control braking command, at block 410, the brake executive mechanism sends a second command to implement the desired braking command.

Accordingly, in various embodiments, the dual control architecture coupled to the brake executive provides versatility in tuning antiskid performance independently of pedal braking performance while using a common architecture that may be implemented for a hydraulic or electric brake control system. Accordingly, in various embodiments, the dual control architecture coupled to the brake executive improves the performance of pedal braking (better noise immunity) without detriment to the antiskid performance.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different crosshatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A brake system, comprising:
a brake mode selection mechanism (204) configured to provide a desired braking command;
an antiskid control mechanism (206) configured to provide an antiskid control braking command;
a desired braking controller (210);
an antiskid controller (208); and
a brake executive mechanism (202) configured to:
determine whether the antiskid control braking command is less than the desired braking command;
responsive to the antiskid control braking command being less than the desired braking command, send a first command to implement the antiskid control braking command, wherein responsive to receiving the first command, the antiskid controller (208) is configured to control at least one of a pressure or a force applied to a brake assembly; and
responsive to the desired braking command being less than the antiskid control braking command, send a second command to implement the desired braking command, wherein responsive to receiving the second command, the desired braking controller (210) is configured to control at least one of the pressure or the force applied to the brake assembly.

2. The brake system of claim 1, wherein the desired braking command originates from at least one of a brake pedal (238), an autobrake (312), or a deceleration control mechanism.

3. The brake system of claim 1 or 2, wherein the antiskid controller (208) is configured to provide first frequency responses of between 10 Hertz and 16 Hertz.

4. The brake system of any preceding claim, wherein the desired braking controller (210) is configured to provide second frequency responses of between 2 Hertz and 6 Hertz.

5. The brake system of any preceding claim,
wherein, responsive to the antiskid controller (208) controlling the pressure applied to the brake assembly, the antiskid controller (208) is configured to control a servo valve to apply the pressure to the brake assembly, and
wherein, responsive to the antiskid controller (208) controlling the force applied to the brake assembly, the antiskid controller (208) is configured to control at least one electric brake actuator to apply the force to the brake assembly.

6. The brake system of any preceding claim,
wherein, responsive to the desired braking controller (210) controlling the pressure applied to the brake assembly, the desired braking controller (210) is configured to control a servo valve to apply the pressure to the brake assembly, and
wherein, responsive to the desired braking controller (210) controlling the force applied to the brake assembly, the desired braking controller (210) is configured to control at least one electric brake actuator to apply the force to the brake assembly.

7. The brake system of any preceding claim,
wherein, responsive to the brake system being an electric brake system, the brake executive mechanism (202) is configured to send at least one of the first command or the second command to an electric brake actuator controller that includes an origin of the first command or the second command,
wherein the electric brake actuator controller identifies the origin of the first command or the second command,
wherein, responsive to the origin being from the antiskid control mechanism (206), the electric brake actuator controller is configured to send the first command to the antiskid controller (208), and
wherein, responsive to the origin being from the brake mode selection mechanism (204), the electric brake actuator controller is configured to send the second command to the desired braking controller (210).

8. An aircraft, comprising:
a wheel; and
a brake system, as claimed in any preceding claim, coupled to the wheel.

9. A method for dual control of a brake system, the method comprising:
receiving, by a brake executive mechanism (202) via a brake mode selection mechanism (204), a desired braking command;
receiving, by the brake executive mechanism (202) via an antiskid control mechanism (206), an antiskid control braking command;
determining, by the brake executive mechanism (202), whether the antiskid control braking command is less than the desired braking command;
responsive to the antiskid control braking command being less than the desired braking command, sending, by the brake executive mechanism (202), a first command to implement the antiskid control braking command, wherein the first command causes an antiskid controller (208) to control at least one of a pressure or a force applied to a brake assembly; and
responsive to the desired braking command being less than the antiskid control braking command, sending, by the brake executive mechanism (202), a second command to implement the desired braking command, wherein the second command causes a desired braking controller (210) to control at least one of the pressure or the force applied to the brake assembly.

10. The method of claim 9, wherein the desired braking command originates from at least one of a brake pedal, an autobrake, or a deceleration control mechanism.

11. The method of claim 9 or 10, wherein the antiskid controller (208) is configured to provide first frequency responses of between 10 Hertz and 16 Hertz.

12. The method of any of claims 9-11, wherein the desired braking controller (210) is configured to provide second frequency responses of between 2 Hertz and 6 Hertz.

13. The method of any of claims 9-12,
wherein, responsive to the antiskid controller (208) controlling the pressure applied to the brake assembly, the antiskid controller (208) is configured to control a servo valve to apply the pressure to the brake assembly, and
wherein, responsive to the antiskid controller (208) controlling the force applied to the brake assembly, the antiskid controller (208) is configured to control at least one electric brake actuator to apply the force to the brake assembly.

14. The method of any of claims 9-13,
wherein, responsive to the desired braking controller (210) controlling the pressure applied to the brake assembly, the desired braking controller (210) is configured to control a servo valve to apply the pressure to the brake assembly, and
wherein, responsive to the desired braking controller (210) controlling the force applied to the brake assembly, the desired braking controller (210) is configured to control at least one electric brake actuator to apply the force to the brake assembly.
